# EUROPÄISCHE PATENTSCHRIFT

(11) **EP 3 174 769 B1**
(45) Veröffentlichungstag und Bekanntmachung des Hinweises auf die Patenterteilung: **14.03.2018**
(21) Anmeldenummer: 15724520.0
(22) Anmeldetag: 22.05.2015
(51) Int. Cl.: B60T 13/68, B60T 17/18

(54) **BREMSDRUCKMODULATOR EINES ELEKTRONISCHEN BREMSSYSTEMS EINES NUTZFAHRZEUGS**
BRAKE PRESSURE MODULATOR OF AN ELECTRONIC BRAKING SYSTEM OF A UTILITY VEHICLE
MODULATEUR DE PRESSION DE FREINAGE D'UN SYSTÈME DE FREINAGE ÉLECTRONIQUE D'UN VÉHICULE UTILITAIRE

(30) Priorität: 31.07.2014 DE 102014011422
(43) Veröffentlichungstag der Anmeldung: 07.06.2017
(73) Patentinhaber: WABCO GmbH, 30453 Hannover (DE)
(72) Erfinder: LÜLFING, Ralph-Carsten, 30826 Garbsen (DE); OTREMBA, Robert, 30952 Ronnenberg (DE); REHLING, Stefan, 31675 Bückeburg (DE); SCHAPPLER, Hartmut, 30455 Hannover (DE)
(74) Vertreter: Lauerwald, Jörg
(86) Internationale Anmeldenummer: PCT/EP2015/001051
(87) Internationale Veröffentlichungsnummer: WO 2016/015795

(56) Entgegenhaltungen:
- WO-A1-95/16594
- DE-A1- 10 245 916
- DE-A1-102009 009 811

## Beschreibung

Die Erfindung betrifft einen Bremsdruckmodulator eines elektronischen Bremssystems eines Nutzfahrzeugs gemäß dem Oberbegriff des Patentanspruchs 1.

Elektronische Bremssysteme ermöglichen eine genau dosierbare und schnelle Bremsung eines Fahrzeugs. Dabei wird das Ausgangssignal eines Bremswertgebers, welches von einem Verzögerungswunsch des Fahrers abhängt, einem Steuergerät zugeleitet. In dem Steuergerät kann das Ausgangssignal des Bremswertgebers zusätzlich durch Fahrsicherheitssysteme, wie beispielsweise ein Antiblockiersystem, eine Antriebsschlupfregelung oder ein System zur Fahrstabilitätsregelung modifiziert werden. Das Steuergerät erzeugt daraus Steuersignale, welche sogenannten Bremsdruckmodulatoren zugeleitet werden, die mittels elektromagnetisch betätigbare Ventilanordnungen die Zufuhr eines Druckmittels, bei Nutzfahrzeugen meistens Druckluft, radbezogen oder achsweise zu den einzelnen Bremseinrichtungen beziehungsweise Bremszylindern steuern. Für den Fall, dass das genannte Steuergerät ausfällt, beispielsweise weil dessen Stromversorgung unterbrochen ist, verfügt das elektronische Bremssystem üblicherweise über eine Redundanzeinrichtung der Betriebsbremse beziehungsweise der Druckregelung, um das Fahrzeug auch in dieser Betriebssituation durch eine Bremsenbetätigung sicher zum Anhalten bringen zu können.

Durch die Verwendung räumlich und baulich getrennter Bremsdruckmodulatoren für die einzelnen Druckregelkreise entsteht bei Druckluftbremsanlagen der beschriebenen Art bei leichten bis mittelschweren Nutzfahrzeugen ein vergleichsweise großer Bauraumbedarf und Herstellungsaufwand.

Vor diesem Hintergrund ist aus der DE 10 2009 009 811 A1 ein zweikreisiger Bremsdruckmodulator für ein elektronisches Bremssystem eines Fahrzeugs bekannt. Der Bremsdruckmodulator weist zwei Druckregelkreise auf, bei denen die Strömungswege eines jeden Kreises von jeweils einem eigenen Druckluftvorrat gespeist werden und bis zu dem jeweiligen Arbeitsdruckanschluss pneumatisch getrennt sind. Einer der beiden Arbeitsdruckanschlüsse ist zum Anschluss eines Bremszylinders eines linken Rades sowie eines Bremszylinders eines rechten Rades einer Vorderachse und der andere der beiden Arbeitsdruckanschlüsse zum Anschluss eines Bremszylinders eines linken Rades sowie eines Bremszylinders eines rechten Rades einer Hinterachse vorgesehen. Den Bremszylindern ist jeweils ein Drucksteuerventil für den Betrieb eines Antiblockiersystems vorgeschaltet. Jedem Druckregelkreis ist ein eigener Redundanzsteuerdruckkreis zugeordnet, durch den bei einem Ausfall von elektrischen Komponenten des Bremssystems ein Arbeitsdruck an dem Arbeitsdruckanschluss des jeweiligen Druckregelkreises geleitet wird. Jeder Redundanzsteuerdruckkreis wird von einem Fußbremsventil eines Fußbremswertgebers gespeist, welches mit dem jeweiligen Druckluftvorrat pneumatisch verbunden ist. Für die beiden Druckregelkreise des zweikreisigen Bremsdruckmodulators ist eine gemeinsame elektronische Steuerungseinrichtung vorgesehen, die für jeden Druckregelkreis, abhängig von den Bremsanforderungssignalen des Fußbremswertgebers, ein einem Soll-Arbeitsdruck entsprechendes Steuersignal erzeugt. Für jeden Druckregelkreis ist eine eigene elektromagnetisch betätigbare Ventileinrichtung vorhanden, welche abhängig von diesen Steuersignalen aus dem Vorratsdruck des zugeordneten Druckluftvorrats einen Ist-Arbeitsdruck für den jeweiligen Arbeitsdruckanschluss erzeugt.

Der Erfindung liegt die Aufgabe zugrunde, einen einfachen, kompakten und kostengünstigen Bremsdruckmodulator für ein elektronisches Bremssystem eines Nutzfahrzeugs vorzustellen.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Bremsdruckmodulator eines elektronischen Bremssystems zwei voneinander unabhängige Druckregelkreise zusammen mit einem gemeinsamen elektronischen Steuermodul in einer gemeinsamen Baueinheit integriert werden können, um den Kosten- und Bauaufwand zu reduzieren. Eine solche kompakte Baueinheit kann als eine vollwertige, zweikreisige elektropneumatische Steuerung für eine Bremsanlage ausgebildet sein. Um den Aufwand für diese Baueinheit noch weiter zu reduzieren, ist es möglich, die Gestaltung der erforderlichen Ausfallsicherungskomponenten, unter Berücksichtigung der gesetzlichen Vorschriften, zu minimieren.

Demnach geht die Erfindung aus von einem Bremsdruckmodulator eines elektropneumatischen Bremssystems eines Nutzfahrzeugs, welches pneumatisch betätigbare Radbremsen an den abbremsbaren Fahrzeugräder aufweist, wobei der Bremsdruckmodulator wenigstens zwei zu einer Baueinheit zusammengefasste Druckregelkreise aufweist, bei dem die Druckregelkreise jeweils einem Bremskreis einer Fahrzeugachse zugeordnet sind, bei dem jeder der Druckregelkreise mit einem eigenen Druckluftvorratsbehälter verbunden oder verbindbar ist, bei dem wenigstens ein Redundanzsteuerdruckpfad, wenigstens ein Entlüftungspfad sowie eine gemeinsame Steuerungselektronik für die Druckregelkreise vorhanden ist, und bei dem die Druckregelkreise mittels der Steuerungselektronik unabhängig voneinander regelbar sind.

Zur Lösung der gestellten Aufgabe sieht die Erfindung vor, dass jeder Druckregelkreis einen eigenen Entlüftungspfad aufweist, und dass wenigstens einer der Druckregelkreise einen eigenen Redundanzsteuerdruckpfad sowie wenigstens ein anderer der Druckregelkreise eine Einrichtung zur Zwangsentlüftung bei einem Ausfall über den zugeordneten Entlüftungspfad aufweist.

Unter einem Bremsdruckmodulator wird eine elektronisch ansteuerbare Ventilanordnung verstanden, mittels der eine Druckregelung für ein Bremssystem eines Fahrzeugs durchführbar ist. Unter dem Begriff Redundanzsteuerdruckpfad wird ein redundanter pneumatischer Strömungsweg bei einem Bremsdruckmodulator verstanden, über den bei einer Fehlfunktion eines Bremssystems eine Bremsfunktion einer Betriebsbremse des Fahrzeugs sichergestellt ist.

Durch die beschriebene Konstruktion des Bremsdruckmodulators ist dieser kompakt aufgebaut und kostengünstig mit wenigen, einfach strukturierten Komponenten herstellbar. Bei diesem wenigstens zweikreisigen Bremsdruckmodulator sind wenigstens zwei vollständig pneumatisch entkoppelte und zueinander rückwirkungsfrei steuerbare Druckregelkreise in einem Modulblock integriert, wobei bei einem der Kreise ein Redundanzsteuerdruckpfad eingespart ist. An einem der beiden Druckregelkreise ist demnach ein Redundanzsteueranschluss, an dem anderen der beiden Druckregelkreise kein Redundanzsteueranschluss sondern eine Zwangsentlüftungseinrichtung angeordnet. Diese Zwangsentlüftungseinrichtung kann einfach dadurch realisiert sein, dass ein Entlüftungsventil, welches in dem zugeordneten Entlüftungspfad angeordnet ist, in stromlosem Zustand pneumatisch entlüftend, also auf Durchgang geschaltet ist. In dem Druckregelkreis mit Redundanzsteueranschluss ist hingegen ein Entlüftungsventil angeordnet, welches in stromlosem Zustand geschlossen ist.

Bei einer Fehlfunktion des elektronischen Bremssystems können über den vorhandenen Redundanzsteuerdruckpfad die Radbremsen an zumindest einer Achse, unter Verzicht einer elektronischen Regelung, weiterhin geschlossen und gelöst werden. Andererseits wird bei einer Fehlfunktion eine unkontrollierte oder ungewollte Einbremsung an einer Achse, deren Bremsen keinen Redundanzsteueranschluss besitzen, mittels einer Zwangsentlüftung des betreffenden Druckregelkreises verhindert. Dadurch ist ein einfaches, kostengünstiges und sicheres Bremssystem geschaffen, welches beispielsweise für leichte Nutzfahrzeuge, wie kleinere Lastkraftwagen oder Busse, gut geeignet ist.

Der kompakt aufgebaute zweikreisige Bremsdruckmodulator kann am Fahrzeugchassis an verschiedenen Einbauorten angeordnet werden. Dadurch lässt sich ein Verlegungsplan für die einzelnen pneumatischen Verbindungen zu den Radbremsen mit geringem Aufwand an verschiedene Fahrzeugtypen anpassen, derart, dass die jeweiligen Rohrleitungslängen und Rohrleitungswege optimal gestaltet werden können.

Bei einem zweikreisigen Bremsdruckmodulator mit den Merkmalen der Erfindung kann vorgesehen sein, dass derjenige Druckregelkreis, welcher einen Redundanzsteuerdruckpfad aufweist, einem Vorderachsbremskreis zugeordnet ist, und dass ein anderer der Druckregelkreis, welcher die Einrichtung zur Zwangsentlüftung aufweist, einem Hinterachsbremskreis zugeordnet ist.

Der vorgeschlagene Bremsdruckmodulator ist demnach als ein Achsbremsmodulator einer elektronisch regelbaren zweikreisigen Bremsanlage wirksam. Durch zwei pneumatisch voneinander getrennte Druckregelkreise beziehungsweise Ventilkreise können die Bremsdrücke achsweise unabhängig voneinander geregelt werden. Der zweikreisig aufgebaute Bremsdruckmodulator ist an einen Vorratsdruck für einen Vorderachsbremskreis und einen davon unabhängigen Vorratsdruck für einen Hinterachsbremskreis angeschlossen. Im Fall einer Fehlfunktion des elektronischen Bremssystems kann das Fahrzeug weiter über die Vorderachsräder, deren Bremskreis ein Redundanzsteueranschluss zugeordnet ist, abgebremst werden. Ein Tausch der Zuordnung der beiden Druckregelkreise ist grundsätzlich möglich.

Eine Ausführungsform des Bremsdruckmodulators gemäß der Erfindung kann dadurch realisiert sein, dass in diesem zwei Druckregelkreise angeordnet sind, wobei ein erster Druckregelkreis drei die Strömungswege steuernde 2/2-Magnetventile aufweist, welche als ein erstes Belüftungsventil, ein erstes Entlüftungsventil und ein Redundanzsteuerventil ausgebildet sind, bei dem der erste Druckregelkreis ein die Druckluftmenge regulierendes pneumatisch betätigbares erstes Relaisventil aufweist, wobei das erste Belüftungsventil stromlos geschlossen sowie eingangsseitig mit einem ersten Druckluftvorratsbehälter und ausgangsseitig mit dem ersten Relaisventil verbunden ist, wobei das erste Entlüftungsventil stromlos geschlossen sowie eingangsseitig mit dem ersten Belüftungsventil und ausgangsseitig mit einem ersten Entlüftungspfad verbunden ist, wobei das Redundanzsteuerventil eingangsseitig mit einem Bremswertgeberventil eines Bremswertgebers sowie ausgangsseitig mit dem ersten Relaisventil verbunden ist, wobei das erste Relaisventil mit dem ersten Druckluftvorratsbehälter, einem ausgangsseitigen ersten Arbeitsdruckanschluss und dem ersten Entlüftungspfad verbunden ist, bei dem der zweite Druckregelkreis zwei die Strömungswege steuernde 2/2-Magnetventile aufweist, welche als ein zweites Belüftungsventil und ein zweites Entlüftungsventil ausgebildet sind, und bei dem im zweiten Druckregelkreis ein die Druckluftmenge regulierendes pneumatisch betätigbares zweites Relaisventil angeordnet ist, wobei das zweite Belüftungsventil stromlos geschlossen sowie eingangsseitig mit einem zweiten Druckluftvorratsbehälter und ausgangsseitig mit dem zweiten Relaisventil verbunden ist, wobei das zweite Entlüftungsventil stromlos offen sowie eingangsseitig mit dem zweiten Belüftungsventil und ausgangsseitig mit einem zweiten Entlüftungspfad verbunden ist, und bei dem das zweite Relaisventil mit dem zweiten Druckluftvorratsbehälter, einem ausgangsseitigen zweiten Arbeitsdruckanschluss und dem zweiten Entlüftungspfad verbunden ist.

Demnach wird ein Fahrzeugverzögerungswille des Fahrers, welcher durch eine Betätigung eines Bremspedals signalisiert wird, mittels eines Bremswertgebers beziehungsweise Fußbremsventils erfasst. Ein diesbezügliches elektrisches Signal wird dem Bremsdruckmodulator zugeführt, der abhängig von diesem Signal achsweise jeweils einen Bremsdruck an den Arbeitsdruckanschlüssen erzeugt, um das Fahrzeug über eine pneumatische Druckbeaufschlagung der Bremszylinder der Radbremsen entsprechend abzubremsen. Bei einer Rücknahme der Auslenkung des Bremspedals wird der Bremsdruck achsweise durch den Bremsdruckmodulator über den jeweiligen Entlüftungspfad reduziert. Der Bremswertgeber weist weiterhin ein Ventil auf, welches mit einem Druckluftvorrat pneumatisch verbunden ist. Das Bremswertgeberventil stellt dem Redundanzsteuerdruckpfad stets einen Redundanzsteuerdruck zur Verfügung. Im Fall eines elektrischen Ausfalls der Steuerungselektronik kann derjenige Bremskreis, dem der Redundanzsteuerdruckpfad zugeordnet ist, über diesen Druckpfad weiter mit Druckluft versorgt und dadurch betrieben werden.

Der Bremsdruckmodulator kann zusätzlich zu den beiden Arbeitsdruckanschlüssen an den beiden Druckregelkreisen weitere Arbeitsdruckanschlüsse aufweisen. Möglich ist auch eine Erweiterung des Bremsdruckmodulators zu einem Bremsdruckmodulator mit mehr als zwei voneinander unabhängigen Druckregelkreisen.

Außerdem kann vorgesehen sein, dass für eine individuelle Regelung der Bremsdrücke an den Radbremsen Radbremsmodulatoren angeordnet sind, die als Regelventileinrichtungen ausgebildet sind und die mit den achsbezogenen Druckregelkreisen des Bremsdruckmodulators zusammenwirken, wobei bei einer Aktivierung eines antriebsrelevanten oder eines verzögerungsrelevanten Fahrsicherheitssystems, wie einem Antiblockiersystem, einer Antriebsschlupfregelung oder einer elektronischen Fahrstabilitätsregelung, bedarfsweise ein Bremsdruck an den betreffenden Radbremsen individuell variierbar ist. Die elektronische Ansteuerung der Radbremsmodulatoren kann über die Steuerungselektronik des Bremsdruckmodulators erfolgen.

Außerdem kann vorgesehen sein, dass bei einer Fehlfunktion die Bremsdruckzufuhr zu den Radbremsen mittels der Radbremsmodulatoren erforderlichenfalls absperrbar ist. Bei einem elektrischen und/oder pneumatischen Ausfall im Achsbremsmodulator können demnach die Radbremsmodulatoren die Radbremsdrücke absperren. Dadurch wird unter Berücksichtigung der Funktion der Radbremsmodulatoren eine ungewollte einseitige Einbremsung des Fahrzeugs verhindert. Zudem wird ein mögliches Heißlaufen einer oder mehrerer Radbremsen aufgrund von Restdrücken in den Druckregelkreisen im Fall einer Fehlfunktion sicher vermieden.

Ein gemäß der Erfindung ausgebildetes elektronisches Bremssystem kann somit aus einem zweikreisigen, achsweise wirksamen Bremsdruckmodulator und aus mehreren radbezogen wirksamen Radbremsmodulatoren bestehen. Demnach kann die achsweise Regelung des erfindungsgemäßen Bremsdruckmodulators mit der radbezogenen Regelung der Radbremsmodulatoren für die erwähnten Fahrsicherheitssysteme kombiniert werden. Die Steuerungselektronik für die Druckregelkreise kann alle erforderlichen Schnittstellen für die Erfassung und Verarbeitung der relevanten Daten und für die Steuerung sowohl des Bremsdruckmodulators als auch der Radbremsmodulatoren aufweisen. Ebenso können weitere Daten, die bereits in vielen Fahrzeugen auf einem Datenbus des Fahrzeugs zur Verfügung stehen, wie Raddrehzahlen, Bremsbelagdicke, Lenkwinkelinformationen und Motorbetriebsinformationen, von der Steuerungselektronik eingelesen und bei der elektronischen Bremsregelung berücksichtigt werden. Die Steuerungselektronik kann als ein Modul direkt an dem Modulblock des Bremsdruckmodulators angeordnet sein.

Der beschriebene Bremsdruckmodulator ist als eine kostengünstige Baueinheit für zumindest zwei Druckregelkreise mit einer zweikreisigen Druckluftversorgung und einem einkreisigen Redundanzsteuerdruck ausgebildet. Die beiden Druckregelkreise sind pneumatisch vollständig entkoppelt im Sinne einer zweikreisigen Bremsanlage. Einer der Druckregelkreise besitzt einen Redundanzsteuerdruckpfad und damit eine Redundanzfunktion. Der andere Druckregelkreis besitzt eine Zwangsentlüftung, welche bei Ausfall der elektronischen Regelung wirksam ist.

An dieser Stelle sei erwähnt, dass der Bremsdruckmodulator auch als eine Baueinheit mit einer zweikreisigen Druckluftversorgungseinrichtung und mit einem zweikreisigen Redundanzsteuerdruck ausgebildet werden kann. Für Fahrzeuge, bei denen sowohl für die Vorderachse als auch für die Hinterachse ein Redundanzsteueranschluss verlangt wird, kann, anstelle einer Einrichtung zur Zwangsentlüftung bei einem Ausfall, der zweite Druckregelkreis in baugleicher Weise zu dem ersten Druckregelkreis auch mit einem eigenen Redundanzsteuerdruckpfad ausgebildet sein. Eine entsprechende Umrüstung des Bremsdruckmodulators ist möglich und einfach realisierbar. Der Bremswertgeber weist in diesem Fall zwei Bremswertgeberventile auf, welche mit dem jeweiligen Druckluftvorratsbehälter pneumatisch verbunden sind, so dass bei einem elektrischen Ausfall der Steuerungselektronik oder einem elektrischen Ausfalls des Bremsmodulators über die zugehörigen Redundanzsteuerdruckpfade beide Bremskreise weiter betätigt werden können.

Zur weiteren Verdeutlichung der Erfindung ist der Beschreibung eine Zeichnung eines Ausführungsbeispiels beigefügt. In dieser zeigt
Fig. 1 ein Schaltschema eines elektronisch gesteuerten Bremssystems eines Nutzfahrzeugs mit einem Bremsdruckmodulator gemäß einer bevorzugten Ausführungsform der Erfindung, und
Fig. 2 einen als zweikreisigen Achsbremsmodulator ausgeführten Bremsdruckmodulator gemäß Fig. 1 für einen ersten Druckregelkreis einer Vorderachse und einen zweiten Druckregelkreis einer Hinterachse.

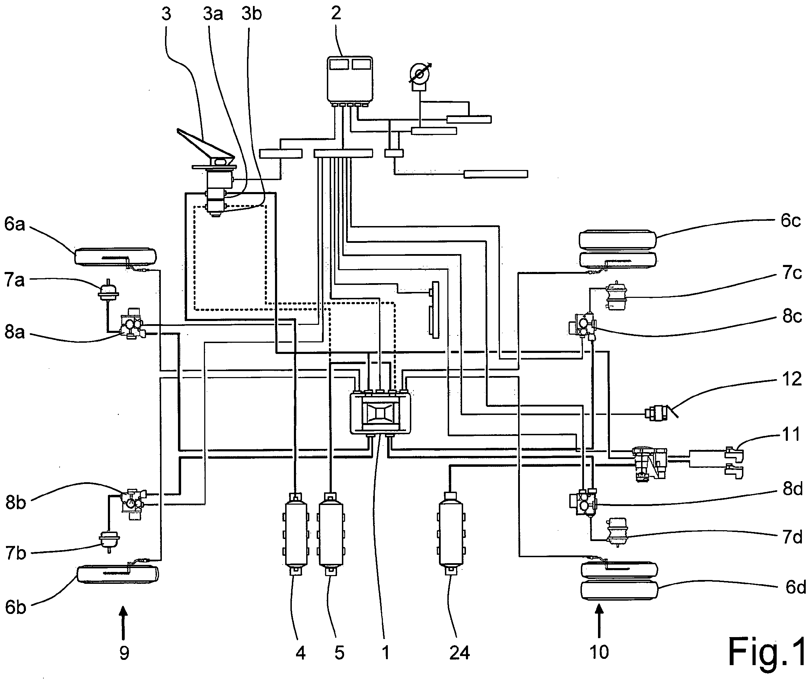

In Fig. 1 sind zur Unterscheidung der pneumatischen und der elektrischen Verschaltung der Komponenten die pneumatischen Verbindungen mit größerer Strichstärke dargestellt als die elektrischen Leitungen.

Das in Fig.1 dargestellte Bremssystem weist einen Bremsdruckmodulator 1 auf, welcher als eine Baueinheit ausgebildet ist, in der hydraulische Steuerungskomponenten für die Steurung von zwei Bremskreisen 9, 10 zusammengefasst sind. Außerdem gehört zu dem Bremssystem eine Steuerungselektronik 2, ein Fußbremswertgeber 3 mit einem ersten Bremswertgeberventil 3a und einem optionalen zweiten Bremswertgeberventil 3b, ein erster Druckluftvorratsbehälter 4 sowie ein zweiter Druckluftvorratsbehälter 5, und jeweils eine Radbremse 7a, 7b sowie jeweils ein Radbremsmodulator 8a, 8b für die Fahrzeugräder 6a, 6b eines Vorderachsbremskreises 9 und jeweils eine Radbremse 7c, 7d sowie einen Radbremsmodulator 8c, 8d jeweils für die Fahrzeugräder 6a, 6b eines Hinterachsbremskreises 10. Die Radbremsmodulatoren 8a, 8b, 8c, 8d sind als Magnetventileinrichtungen ausgebildet, welche beim Wirksamwerden eines Antiblockiersystems, einer Antriebsschlupfregelung oder einer elektronischen Fahrstabilitätsregelung radspezifisch die Bremszylinderdrücke der Radbremsen 7a, 7b, 7c, 7d anpassen. Außerdem ist eine von einem dritten Druckluftbehälter 24 über eine zugeordnet Leitung versorgbare Anhängerbremseinrichtung 11 und ein elektrischer Anschluss 12 für ein Anhängerfahrzeug dargestellt, deren Aufbau und Verwendung hier nicht weiter wichtig sind. Ebenso ist eine an sich vorhandene Feststellbremseinrichtung nicht dargestellt.

Der Bremsdruckmodulator 1 ist an einem zentralen Einbauort des Fahrzeugs angeordnet. Der Bremsdruckmodulator 1 ist pneumatisch über zugeordnete Rohrleitungen mit den Radbremsen 7a, 7b und den Radbremsmodulatoren 8a, 8b des Vorderachsbremskreises 9 sowie mit den Radbremsen 7c, 7d und den Radbremsmodulatoren 8c, 8d des Hinterachsbremskreises 10 verbunden. Außerdem ist der Bremsdruckmodulator 1 über Rohrleitungen mit den beiden Druckluftvorratsbehältern 4, 5 verbunden. Die beiden Druckluftvorratsbehälter 4, 5 sind zudem über Abzweige dieser Rohrleitungen mit dem ersten Bremswertgeberventil 3a und, soweit vorhanden, mit dem zweiten Bremswertgeberventil 3b verbunden, so dass die Bremswertgeberventile 3a, 3b ebenfalls mit dem Bremsdruckmodulator 1 pneumatisch verbunden sind.

Der Bremsdruckmodulator 1 ist über elektrische Leitungen mit der ihn ansteuernden Steuerungselektronik 2 sowie mit nicht weiter bezeichnete Sensoren an den Fahrzeugrädern 6a, 6b, 6c, 6d verbunden, beispielsweise zur Verschleißmessung des Bremsbelags und/oder zur Raddrehzahlermittlung. Außerdem sind der Fußbremswertgeber 3 sowie die Radbremsmodulatoren 8a, 8b, 8c, 8d mit der Steuerungselektronik 2 über elektrische Leitungen verbunden.

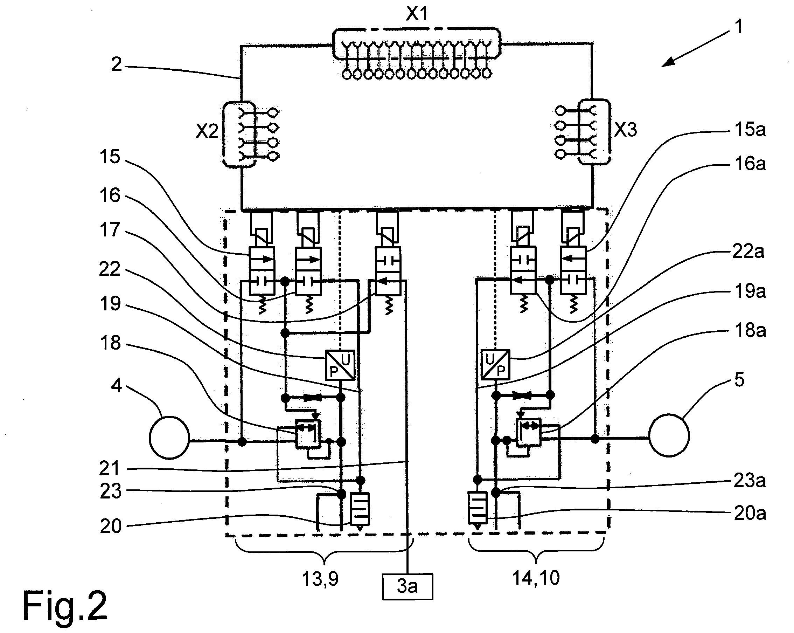

Fig. 2 zeigt den Bremsdruckmodulator 1 im Detail. Der Bremsdruckmodulator 1 ist mit der Steuerungselektronik 2 zu einer Baueinheit zusammengefasst, etwa in einem gemeinsamen Gehäuse oder durch eine gemeinsame Montageplatte. Die Steuerungselektronik 2 weist drei Steckplätze X1, X2, X3 zum Anschluss der genannten elektrischen oder elektronischen Komponenten auf. In Fig. 2 ist allerdings im Wesentlichen die pneumatische Verschaltung der Komponenten dargestellt.

Der Bremsdruckmodulator 1 dient zur Steuerung von zwei Druckregelkreisen 13, 14, wobei ein erster Druckregelkreis 13 dem Vorderachsbremskreis 9 und ein zweiter Druckregelkreis 14 dem Hinterachsbremskreis 10 zugeordnet ist.

Der erste Druckregelkreis 13 weist drei elektrisch betätigbare 2/2-Magnetventile 15, 16, 17 auf, welche als ein erstes Belüftungsventil 15, ein erstes Entlüftungsventil 16 und ein Redundanzsteuerventil 17 ausgebildet sind, sowie ein pneumatisch betätigbares erstes Relaisventil 18. Die Spulen der drei Magnetventile 15, 16, 17 sind mit der Steuerungselektronik 2 elektrisch verbunden und bilden eine Vorsteuereinheit des ersten Druckregelkreises 13. Das erste Relaisventil 18 regelt, also verstärkt oder reduziert, die Druckluftmenge im ersten Druckregelkreis 13. Ihm ist ein erster Drucksensor 22 zugeordnet, der über eine gestrichelt gezeichnete elektrische Leitung mit der Steuerungselektronik 2 verbunden ist.

Das erste Belüftungsventil 15 ist so ausgebildet, dass es durch Federkraft stromlos geschlossen wird. Es ist eingangsseitig mit dem ersten Druckluftvorratstank 4 und ausgangsseitig mit dem ersten Relaisventil 18 verbunden. Das erste Entlüftungsventil 16 ist ebenfalls so ausgebildet, dass es durch Federkraft stromlos geschlossen wird. Es ist eingangsseitig mit dem ersten Belüftungsventil 15 und ausgangsseitig mit einem ersten Entlüftungspfad 19 verbunden. In dem ersten Entlüftungspfad 19 ist zur Geräuschdämpfung ein erster Schalldämpfer 20 angeordnet.

Das Redundanzsteuerventil 17 ist eingangsseitig über einen Redundanzsteuerdruckpfad 21 mit dem ersten Bremswertgeberventil 3a und ausgangsseitig mit dem ersten Relaisventil 18 verbunden. Das erste Relaisventil 18 ist mit dem ersten Druckluftvorratstank 4, einem ausgangsseitigen ersten Arbeitsdruckanschluss 23 und dem ersten Entlüftungspfad 19 verbunden. An den Arbeitsdruckanschluss 23 sind die Radbremsen 7a, 7b beziehungsweise deren Bremszylinder sowie die den Bremszylindern der Radbremsen 7a, 7b zugeordneten und vorgeschalteten Radbremsmodulatoren 8a, 8b des Vorderachsbremskreises 9 angeschlossen (siehe auch Fig. 1).

Der zweite Druckregelkreis 14 verfügt im Unterschied zum ersten Druckregelkreis 13 über keinen Redundanzsteuerdruckpfad und kein Redundanzsteuerventil. Der zweite Druckregelkreis 14 weist demnach zwei elektrisch betätigbare 2/2-Magnetventile auf, welche als ein zweites Belüftungsventil 15a und als ein zweites Entlüftungsventil 16a ausgebildet sind, sowie ein pneumatisch betätigbares zweites Relaisventil 18a. Das zweite Belüftungsventil 15a und das zweite Entlüftungsventil 16a sind mit der Steuerungselektronik 2 elektrisch verbunden und bilden eine Vorsteuereinheit des zweiten Druckregelkreises 14. Das Relaisventil 18a regelt die Druckluftmenge im zweiten Druckregelkreis 14. Ihm ist ein Drucksensor 22a zugeordnet, der über eine elektrische Leitung mit der Steuerungselektronik 2 verbunden ist.

Das zweite Belüftungsventil 15a wird bei Nichtbetätigung durch Federkraft stromlos geschlossen. Es ist eingangsseitig mit dem zweiten Druckluftvorratstank 5 und ausgangsseitig mit dem zweiten Relaisventil 18a verbunden. Das zweite Entlüftungsventil 16a des zweiten Druckregelkreises 14 ist im Gegensatz zum ersten Druckregelkreis 13 bei Nichtbetätigung durch Federkraft gehalten stromlos offen. Das zweite Entlüftungsventil 16a ist eingangsseitig mit dem zweiten Belüftungsventil 15a und ausgangsseitig mit einem zweiten Entlüftungspfad 19a verbunden. Dadurch wirkt das zweite Entlüftungsventil 16a bei einem elektrischen Ausfall der Steuerungselektronik 2 als eine Zwangsentlüftungsvorrichtung. In dem zweiten Entlüftungspfad 19a ist zur Geräuschdämpfung ein zweiter Schalldämpfer 20a angeordnet.

Das zweite Relaisventil 18a ist mit dem zweiten Druckluftvorratstank 5, einem ausgangsseitigen zweiten Arbeitsdruckanschluss 23a und dem zweiten Entlüftungspfad 19a verbunden. An den zweiten Arbeitsdruckanschluss 23a sind die Radbremsen 7c, 7d beziehungsweise deren Bremszylinder sowie die den Bremszylindern vorgeschalteten zugehörigen Radbremsmodulatoren 8c, 8d des Hinterachsbremskreises 9 angeschlossen (siehe auch Fig. 1). An den zweiten Arbeitsdruckanschluss 23a ist auch ein zweiter Drucksensor 22a angeschlossen, welcher über eine gestrichelt gezeichnete elektrische Leitung mit der Steuerungselektronik 2 verbunden ist.

An dieser Stelle sei erwähnt, dass das in Fig. 1 angedeutete zweite Bremswertgeberventil 3b für den Fall vorgesehen ist, dass der zweite Druckregelkreis 14 ebenfalls einen Redundanzsteuerdruckpfad aufweist. In diesem Fall sind beide Druckregelkreis 13, 14 baugleich ausgebildet.

Im normalen, das heißt störungsfreien elektronisch geregelten Bremsbetrieb wird entsprechend eines Bremsanforderungssignals des Fußbremswertgebers 3 getrennt für beide Druckregelkreise 13, 14 durch Ansteuerung der genannten Magnetventile 15, 16; 15a, 16a ein zur pneumatischen Kraftbeaufschlagung der Vorderachsbremsen 7a, 7b und der Hinterachsbremsen 7c, 7d jeweils erforderlicher Druck im jeweiligen Relaisventil 18, 18a erzeugt und an den Arbeitsdruckanschlüssen 23, 23a zur Verfügung gestellt.

Über das erste Bremswertgeberventil 3a wird der Redundanzsteuerdruckpfad 21 ebenfalls mit Druck beaufschlagt. Bei einem Ausfall der Steuerungselektronik 2 wird dieser Druck für den ersten Druckregelkreis 13, also den Vorderachsbremskreis 9, über das offene Redundanzsteuerventil 17 durchgeschaltet, so dass zumindest eine vorgeschriebene Bremswirkung an den Vorderrädern 6a, 6b sichergestellt ist. Der zweite Druckregelkreis 14 wird durch das zweite Entlüftungsventil 16a bei einer elektrischen Störung zwangsentlüftet, so dass an dem Hinterachsbremskreis 10 keine unkontrollierte beziehungsweise ungewollte Bremswirkung entstehen kann.

### Bezugszeichenliste

- 1: Bremsdruckmodulator
- 2: Steuerungselektronik
- 3: Fußbremswertgeber
- 3a: Erstes Bremswertgeberventil
- 3b: Zweites Bremswertgeberventil
- 4: Erster Druckluftvorratsbehälter
- 5: Zweiter Druckluftvorratsbehälter
- 6a, 6b, 6c, 6d: Fahrzeugräder
- 7a, 7b, 7c, 7d: Radbremsen, Bremszylinder
- 8a, 8b, 8c, 8d: Radbremsmodulatoren
- 9: Vorderachsbremskreis
- 10: Hinterachsbremskreis
- 11: Anhängerbremseinrichtung
- 12: Druckluftanschluss für ein Anhängerfahrzeug
- 13: Erster Druckregelkreis
- 14: Zweiter Druckregelkreis
- 15: Erstes Belüftungsventil, Magnetventil
- 15a: Zweites Belüftungsventil, Magnetventil
- 16: Erstes Entlüftungsventil, Magnetventil
- 16a: Zweites Entlüftungsventil, Magnetventil
- 17: Redundanzsteuerventil, Magnetventil
- 18: Erstes Relaisventil
- 18a: Zweites Relaisventil
- 19: Erster Entlüftungspfad
- 19a: Zweiter Entlüftungspfad
- 20: Erster Schalldämpfer
- 20a: Zweiter Schalldämpfer
- 21: Redundanzsteuerdruckpfad
- 22: Erster Drucksensor
- 22a: Zweiter Drucksensor
- 23: Erster Arbeitsdruckanschluss
- 23a: Zweiter Arbeitsdruckanschluss
- 24: Dritter Druckluftvorratsbehälter
- X1: Erster Steckplatz
- X2: Zweiter Steckplatz
- X3: Dritter Steckplatz

## Patentansprüche

1. Bremsdruckmodulator (1) eines elektropneumatischen Bremssystems eines Nutzfahrzeugs, welches pneumatisch betätigbare Radbremsen (7a, 7b, 7c, 7d) an den abbremsbaren Fahrzeugrädern (6a, 6b, 6c, 6d) aufweist, wobei der Bremsdruckmodulator (1) wenigstens zwei zu einer Baueinheit zusammengefasste Druckregelkreise (13, 14) aufweist,
bei dem die Druckregelkreise (13, 14) jeweils einem Bremskreis (9, 10) einer Fahrzeugachse zugeordnet sind,
bei dem jeder der Druckregelkreis (13, 14) mit einem eigenen Druckluftvorratsbehälter (4, 5) verbunden oder verbindbar ist,
bei dem wenigstens ein Redundanzsteuerdruckpfad (21), wenigstens ein Entlüftungspfad (19, 19a) sowie eine gemeinsame Steuerungselektronik (2) für die Druckregelkreise (13, 14) vorhanden ist,
und bei dem die Druckregelkreise (13, 14) mittels der Steuerungselektronik (2) unabhängig voneinander regelbar sind,
**dadurch gekennzeichnet,**
**dass** jeder Druckregelkreis (13, 14) einen eigenen Entlüftungspfad (19, 19a) aufweist, und dass wenigstens einer der Druckregelkreise (13, 14) einen eigenen Redundanzsteuerdruckpfad (21) sowie wenigstens ein anderer der Druckregelkreise (13, 14) eine Einrichtung (16a) zur Zwangsentlüftung bei einem Ausfall über den zugeordneten Entlüftungspfad (19a) aufweist.

2. Bremsdruckmodulator nach Anspruch 1, **dadurch gekennzeichnet, dass** derjenige Druckregelkreis (13), welcher einen Redundanzsteuerdruckpfad (21) aufweist, einem Vorderachsbremskreis (9) zugeordnet ist, und dass ein anderer Druckregelkreis (14), welcher die Einrichtung (16a) zur Zwangsentlüftung aufweist, einem Hinterachsbremskreis (10) zugeordnet ist.

3. Bremsdruckmodulator nach Anspruch 1 oder 2, **dadurch gekennzeichnet, dass** zwei Druckregelkreise (13, 14) angeordnet sind,
wobei ein erster Druckregelkreis (13) drei die Strömungswege steuernde 2/2-MagnetVentile aufweist, welche als ein erstes Belüftungsventil (15), ein erstes Entlüftungsventil (16) und ein Redundanzsteuerventil (17) ausgebildet sind,
bei dem der erste Druckregelkreis (13) ein die Druckluftmenge regulierendes pneumatisch betätigbares erstes Relaisventil (18) aufweist,
wobei das erste Belüftungsventil (15) stromlos geschlossen sowie eingangsseitig mit einem ersten Druckluftvorratsbehälter (4) und ausgangsseitig mit dem ersten Relaisventil (18) verbunden ist,
wobei das erste Entlüftungsventil (16) stromlos geschlossen sowie eingangsseitig mit dem ersten Belüftungsventil (15) und ausgangsseitig mit einem ersten Entlüftungspfad (19) verbunden ist,
wobei das Redundanzsteuerventil (17) eingangsseitig mit einem Bremswertgeberventil (3a) eines Bremswertgebers (3) sowie ausgangsseitig mit dem ersten Relaisventil (18) verbunden ist,
wobei das erste Relaisventil (18) mit dem ersten Druckluftvorratsbehälter (4), einem ausgangsseitigen ersten Arbeitsdruckanschluss (23) und dem ersten Entlüftungspfad (19) verbunden ist,
bei dem der zweite Druckregelkreis (14) zwei die Strömungswege steuernde 2/2-Magnetventile (15a, 16a) aufweist, welche als ein zweites Belüftungsventil (15a) und ein zweites Entlüftungsventil (16a) ausgebildet sind,
und bei dem im zweiten Druckregelkreis (14) ein die Druckluftmenge regulierendes pneumatisch betätigbares zweites Relaisventil (18a) angeordnet ist,
wobei das zweite Belüftungsventil (15a) stromlos geschlossen sowie eingangsseitig mit einem zweiten Druckluftvorratsbehälter (5) und ausgangsseitig mit dem zweiten Relaisventil (18a) verbunden ist,
wobei das zweite Entlüftungsventil (16a) stromlos offen sowie eingangsseitig mit dem zweiten Belüftungsventil (15a) und ausgangsseitig mit einem zweiten Entlüftungspfad (19a) verbunden ist,
und bei dem das zweite Relaisventil (18a) mit dem zweiten Druckluftvorratsbehälter (5), einem ausgangsseitigen zweiten Arbeitsdruckanschluss (23a) und dem zweiten Entlüftungspfad (19a) verbunden ist.

4. Bremsdruckmodulator nach einem der Ansprüche 1 bis 3, **dadurch gekennzeichnet, dass** den Radbremsen (7a, 7b, 7c, 7d) als Regelventileinrichtungen ausgebildete Radbremsmodulatoren (8a, 8b, 8c, 8d) zugeordnet sind, die mit den achsbezogenen Druckregelkreisen (13, 14) zusammenwirken, wobei bei einer Aktivierung eines antriebsrelevanten oder eines verzögerungsrelevanten Fahrsicherheitssystems, wie einem Antiblockiersystem, eine Antriebsschlupfregelung oder eine elektronische Stabilitätsregelung, bedarfsweise ein Bremsdruck an den betreffenden Radbremsen (7a, 7b, 7c, 7d) individuell variierbar ist.

5. Bremsdruckmodulator nach Anspruch 4, **dadurch gekennzeichnet, dass** bei einer Fehlfunktion die Bremsdruckzufuhr zu den Radbremsen (7a, 7b, 7c, 7d) mittels der Radbremsmodulatoren (8a, 8b, 8c, 8d) absperrbar ist.

## Claims

1. Brake pressure modulator (1) of an electropneumatic brake system of a utility vehicle, which has pneumatically actuable wheel brakes (7a, 7b, 7c, 7d) at the brakable vehicle wheels (6a, 6b, 6c, 6d),
wherein the brake pressure modulator (1) has at least two pressure control circuits (13, 14) combined to form a modular unit,
in which the pressure control circuits (13, 14) are each associated with one brake circuit (9, 10) of a vehicle axle,
in which each of the pressure control circuits (13, 14) is connected or can be connected to a dedicated compressed air reservoir (4, 5),
in which at least one redundant control pressure path (21), at least one venting path (19, 19a) and a common electronic controller (2) for the pressure control circuits (13, 14) are present,
and in which the pressure control circuits (13, 14) can be controlled independently of one another by means of the electronic controller (2),
**characterized**
**in that** each pressure control circuit (13, 14) has a dedicated venting path (19, 19a), and in that at least one of the pressure control circuits (13, 14) has a dedicated redundant control pressure path (21) and at least one other of the pressure control circuits (13, 14) has a device (16a) for forced venting via the associated venting path (19a) in the event of a failure.

2. Brake pressure modulator according to Claim 1, **characterized in that** the pressure control circuit (13) which has a redundant control pressure path (21) is associated with a front axle brake circuit (9), and **in that** another pressure control circuit (14), which has the device (16a) for forced venting, is associated with a rear axle brake circuit (10).

3. Brake pressure modulator according to Claim 1 or 2, **characterized in that** two pressure control circuits (13, 14) are arranged,
wherein a first pressure control circuit (13) has three 2/2-way solenoid valves, which control the flow paths and which are designed as a first air admission valve (15), a first vent valve (16) and a redundant control valve (17),
in which the first pressure control circuit (13) has a pneumatically actuable first relay valve (18) that regulates the compressed air quantity,
wherein the first air admission valve (15) is closed when deenergized and is connected on the inlet side to a first compressed air reservoir (4) and on the outlet side to the first relay valve (18),
wherein the first vent valve (16) is closed when deenergized and is connected on the inlet side to the first air admission valve (15) and on the outlet side to a first venting path (19),
wherein the redundant control valve (17) is connected on the inlet side to a brake signal transmitter valve (3a) of a brake signal transmitter (3) and on the outlet side to the first relay valve (18),
wherein the first relay valve (18) is connected to the first compressed air reservoir (4), to a first working pressure connection (23) on the outlet side and to the first venting path (19),
in which the second pressure control circuit (14) has two 2/2-way solenoid valves (15a, 16a), which control the flow paths and which are designed as a second air admission valve (15a) and a second vent valve (16a),
and in which a pneumatically actuable second relay valve (18a), which regulates the compressed air quantity, is arranged in the second pressure control circuit (14),
wherein the second air admission valve (15a) is closed when deenergized and is connected on the inlet side to a second compressed air reservoir (5) and on the outlet side to the second relay valve (18a),
wherein the second vent valve (16a) is open when deenergized and is connected on the inlet side to the second air admission valve (15a) and on the outlet side to a second venting path (19a),
and in which the second relay valve (18a) is connected to the second compressed air reservoir (5), to a second working pressure connection (23a) on the outlet side and to the second venting path (19a).

4. Brake pressure modulator according to one of Claims 1 to 3, **characterized in that** the wheel brakes (7a, 7b, 7c, 7d) are assigned wheel brake modulators (8a, 8b, 8c, 8d) designed as control valve devices, which interact with the axle-specific pressure control circuits (13, 14), wherein, when a drive-relevant or deceleration-relevant driving safety system, such as an antilock system, a traction control system or an electronic stability control system, is activated, a brake pressure at the relevant wheel brakes (7a, 7b, 7c, 7d) can be varied individually as required.

5. Brake pressure modulator according to Claim 4, **characterized in that** the brake pressure supply to the wheel brakes (7a, 7b, 7c, 7d) can be shut off by means of the wheel brake modulators (8a, 8b, 8c, 8d) in the event of a malfunction.

## Revendications

1. Modulateur de pression de freinage (1) d'un système de freinage électropneumatique d'un véhicule utilitaire, qui présente des freins de roue (7a, 7b, 7c, 7d) pouvant être actionnés par voie pneumatique sur les roues du véhicule qui peuvent être freinées (6a, 6b, 6c, 6d), dans lequel le modulateur de freinage (1) présente au moins deux circuits de régulation de pression (13, 14) réunis en un module,
dans lequel chacun des circuits de régulation de pression (13, 14) est associé respectivement à un circuit de freinage (9, 10) d'un essieu du véhicule, dans lequel chacun des circuits de régulation de pression (13, 14) est ou peut être relié à son propre réservoir de stockage d'air comprimé (4, 5),
dans lequel il se trouve au moins un chemin de pression de commande de redondance (21), au moins un chemin d'échappement d'air (19, 19a) ainsi qu'une électronique de commande commune (2) pour les circuits de régulation de pression (13, 14), et dans lequel les circuits de régulation de pression (13, 14) peuvent être régulés indépendamment l'un de l'autre au moyen de l'électronique de commande (2),
**caractérisé en ce que** chaque circuit de régulation de pression (13, 14) présente son propre chemin d'échappement d'air (19, 19a), et **en ce qu'**au moins un des circuits de régulation de pression (13, 14) présente son propre chemin de pression de commande de redondance (21) et au moins un autre des circuits de régulation de pression (13, 14) présente un dispositif (16a) pour l'échappement d'air forcé en cas de panne par le chemin d'échappement d'air associé (19a).

2. Modulateur de pression de freinage selon la revendication 1, **caractérisé en ce que** le circuit de régulation de pression (13), qui présente un chemin de pression de commande de redondance (21), est associé à un circuit de freinage de l'essieu avant (9), et **en ce qu'**un autre circuit de régulation de pression (14), qui présente le dispositif (16a) pour l'échappement d'air forcé, est associé à un circuit de freinage de l'essieu arrière (10).

3. Modulateur de pression de freinage selon la revendication 1 ou 2, **caractérisé en ce qu'**il se trouve deux circuits de régulation de pression (13, 14), dans lequel un premier circuit de régulation de pression (13) présente trois électrovannes 2/2 commandant les voies d'écoulement, qui sont réalisées sous la forme d'une première vanne d'arrivée d'air (15), d'une première vanne d'échappement d'air (16) et d'une vanne de commande de redondance (17),
dans lequel le premier circuit de régulation de pression (13) présente une première vanne-relais (18) pouvant être actionnée par voie pneumatique et régulant le débit d'air comprimé,
dans lequel la première vanne d'arrivée d'air (15) est fermée sans courant et est reliée à l'entrée à un premier réservoir de stockage d'air comprimé (4) et à la sortie à la première vanne-relais (18),
dans lequel la première vanne d'échappement d'air (16) est fermée sans courant et est reliée à l'entrée à la première vanne d'arrivée d'air (15) et à la sortie à un premier chemin d'échappement d'air (19),
dans lequel la vanne de commande de redondance (17) est reliée à l'entrée à une vanne d'émission d'une valeur de freinage (3a) d'un émetteur de valeur de freinage (3) et à la sortie à la première vanne-relais (18),
dans lequel la première vanne-relais (18) est reliée au premier réservoir de stockage d'air comprimé (4), à un premier raccord de pression de travail en sortie (23) et au premier chemin d'échappement d'air (19),
dans lequel le deuxième circuit de régulation de pression (14) présente deux électrovannes 2/2 (15a, 16a) commandant les voies d'écoulement, qui sont réalisées sous la forme d'une deuxième vanne d'arrivée d'air (15a) et d'une deuxième vanne d'échappement d'air (16a),
et dans lequel une deuxième vanne-relais (18a) pouvant être actionnée par voie pneumatique et régulant le débit d'air comprimé est disposée dans le deuxième circuit de régulation de pression (14),
dans lequel la deuxième vanne d'arrivée d'air (15a) est fermée sans courant et est reliée à l'entrée à un deuxième réservoir de stockage d'air comprimé (5) et à la sortie à la deuxième vanne-relais (18a),
dans lequel la deuxième vanne d'échappement d'air (16a) est ouverte sans courant et est reliée à l'entrée à la deuxième vanne d'arrivée d'air (15a) et à la sortie à un deuxième chemin d'échappement d'air (19a),
et dans lequel la deuxième vanne-relais (18a) est reliée au deuxième réservoir de stockage d'air comprimé (5), à un deuxième raccord de pression de travail en sortie (23a) et au deuxième chemin d'échappement d'air (19a).

4. Modulateur de pression de freinage selon l'une quelconque des revendications 1 à 3, **caractérisé en ce que** des modulateurs de freins de roue (8a, 8b, 8c, 8d) réalisés sous la forme de dispositifs de vannes de régulation sont associés aux freins de roue (7a, 7b, 7c, 7d), et coopèrent avec les circuits de régulation de pression relatifs aux essieux (13, 14), dans lequel, lors de l'activation d'un système de sécurité du véhicule pertinent pour l'entraînement ou pertinent pour une décélération, comme un système antiblocage, une régulation du patinage de l'entraînement ou une régulation électronique de la stabilité, une pression de freinage est si nécessaire variable individuellement aux freins de roue concernés (7a, 7b, 7c, 7d).

5. Modulateur de pression de freinage selon la revendication 4, **caractérisé en ce que**, en cas de fonctionnement défectueux, l'arrivée de la pression de freinage aux freins de roue (7a, 7b, 7c, 7d) peut être fermée au moyen des modulateurs de freins de roue (8a, 8b, 8c, 8d).
